# NEUE EUROPÄISCHE PATENTSCHRIFT

(11) **EP 1 334 288 B2**
(45) Veröffentlichungstag und Bekanntmachung des Hinweises auf die Entscheidung über den Einspruch: **09.03.2011**
(45) Hinweis auf die Patenterteilung: 18.10.2006
(21) Anmeldenummer: 01992843.1
(22) Anmeldetag: 02.11.2001
(51) Int. Cl.: F16D 65/092, F16D 69/04

(54) **ELASTISCHER BREMSKÖRPER**
ELASTIC BRAKE BODY
CORPS DE FREINAGE ELASTIQUE

(30) Priorität: 02.11.2000 DE 10054151
(43) Veröffentlichungstag der Anmeldung: 13.08.2003
(73) Patentinhaber: KNORR-BREMSE Systeme für Schienenfahrzeuge GmbH, 80809 München (DE)
(72) Erfinder: WIRTH, Xaver, 85737 Ismaning (DE)
(74) Vertreter: Specht, Peter
(86) Internationale Anmeldenummer: PCT/EP2001/012696
(87) Internationale Veröffentlichungsnummer: WO 2002/036981

(56) Entgegenhaltungen:
- EP-A- 0 542 358
- WO-A1-00/14421
- WO-A1-00/014422
- DE-A- 1 655 367
- DE-A- 19 840 065
- DE-A1- 4 301 006
- DE-A1- 19 840 065
- US-A- 2 268 280
- US-A- 4 640 390

## Beschreibung

Die Erfindung betrifft einen Bremsenkörper, insbesondere einen Bremsklotz oder Scheibenbremsbelag, umfassend einen Tragkörper mit mindestens einer Ausnehmung sowie mindestens einem in der Ausnehmung angeordneten längs der Ausnehmung beweglich gelagerten Reibwerkstoffelement, wobei Tragkörper und Reibwerkstoffelement zusammen eine Reibfläche ausbilden, gemäß dem Oberbegriff des Anspruches 1.

Insbesondere bei Schienenfahrzeugen gibt es zwei große Klassen von Reibungsbremsen. Zum einen sind dies die sogenannten Klotzbremsen, zum anderen die Scheibenbremsen.

Die Klotzbremse ist eine kostengünstig aufgebaute Reibungsbremse für Schienenfahrzeuge, da bei einer derartigen Bremseinrichtung nur eine Zuspannvorrichtung notwendig ist, mit deren Hilfe ein Bremsklotz auf die Lauffläche des Schienenrades gepreßt wird. Bezüglich der Ausbildung von Klotzbremsen wird auf "Bremsen für Schienenfahrzeuge, Handbuch - Bremstechnische Begriffe und Werte, Knorr-Bremse AG München, 1990", S. 22 - 23 sowie S. 41 verwiesen.

Nachteilig an der Klotzbremse gemäß dem Stand der Technik sind inbesondere die hohe Beanspruchung der Radlauffläche, die die Radlebensdauer verkürzt sowie Aufrauhungen derselben und Riffelbildung. Insbesondere letztgenannte Effekte führen zu einem hohen Laufgeräusch beim Abrollvorgang des Rades. Diese Nachteile der Klotzbremse haben die Entwicklung und den Einsatz der Scheibenbremse in modemen Reisezugwagen begünstigt.

Bei einer Scheibenbremse sind Bremsscheiben beiderseits des Radkörpers angebracht. Die Bremsbeläge wirken auf die Bremsscheibe. Aufgrund der Reibungskraft wird das zugehörige Rad abgebremst.

Betreffend der Ausbildung von Scheibenbremsen gemäß dem Stand der Technik wird auf "Bremsen für Schienenfahrzeuge, Handbuch - Bremstechnische Begriffe und Werte, Knorr-Bremse AG München", S. 50 verwiesen.

Bremsklötze mit Ausnehmungen sind aus einer Vielzahl von Veröffentlichungen bekannt. So zeigt die DE-C-277902 einen Bremsklotz mit Ausnehmungen, in die ein Filzmaterial eingebracht ist. Das Filzmaterial ragt über dem Tragkörper hinaus, so daß mit dem Tragkörper keine gemeinsame Reibfläche ausgebildet wird.

Der aus der DE-U-29500977 bekannte Bremsklotz umfaßt Bohrungen, die Stopfen aus Reibmaterial aufnehmen. Die Stopfen sind mit einer Schraube am Trägerkörper befestigt, das heißt starr gelagert. Eine elastische oder wippende Lagerung der einzelnen Reibwerkstoffblöcke ist aus der DE-U-29500977 nicht bekannt geworden.

Die aus der DE-A-4301006, DE-A-4436457 und DE-U-9307017 bekannten Bremsbeläge umfassen elastisch oder wippend gelagerte Reibwerkstoffblöcke; diese sind direkt am Trägerkörper angeordnet und bilden insbesondere mit dem Trägerkörper keine zusammenhängende Reibwerkstoffläche aus.

Sowohl bei Klotzbremsen als auch bei Scheibenbremsen besteht ein generelles Problem in der Kontaktpressung zwischen Bremsenkörper, d.h. Bremsklotz und Rad bzw. Bremsbelag und Bremsscheibe.

Aufgrund von Wärmedehnungen des Bremsenkörpers bzw. Rades oder der Scheibe, sowie des Verschleißes derselben, liegt der tatsächliche Bremswert oben genannter Reibungsbremsen stets wesentlich niedriger als der gemäß den Materialkonstanten theoretisch Mögliche.

Bei Klotzbremsen kommt noch hinzu, daß die Radlauffläche aus lauftechnischen Gründen eine nicht abwickelbare Fläche ausbildet. Der Bremsklotz liegt daher oftmals auf der Radlaufläche nur punktuell auf beziehungsweise bildet einen linienförmigen Kontakt. Die Klotzbremse wird aufgrund dieses Kontaktes stark überbeansprucht.

Ein weiteres Problem der zuvor beschriebenen Bremssysteme ist das Tragbild, das beispielsweise aufgrund von Wärmedehnungen und Achsverschiebungen nur unzureichend ist. Generell gilt, daß das Tragbild umso schlechter ist, je härter das Material ist. Das schlechte Tragbild führt zur Riffelbildung oder zu Ausbröckelungen in den Radlaufflächen und infolgedessen zu einer hohen Geräuschentwicklung beim Bremsen.

Aus der DE 198 40 065 ist ein Bremskörper mit Reibwerkstoffelementen bekannt. Die Reibwerkstoffelemente sind in Ausnehmungen in einem Tragkörper eingebracht und in Richtung längs der Ausnehmungen beweglich gelagert. Mit dieser Ausführung ist es möglich, daß Tragkörper und Reibwerkstoffelemente eine gemeinsame Reibfläche ausbilden. Die beschriebenen Reibwerkstoffelemente sind zylindrisch ausgeführt, und zwischen die Aufnahmewand des Tragkörpers und die Reibwerkstoffelemente sind Mittel zur Reibungsverminderung geschaltet. Dies können vorzugsweise Hülsen aus Blech sein.

Die dargestellte Ausführung weist jedoch einige Nachteile auf. Trotz der vorzugsweise eingebrachten Mittel zur Reibungsverminderung unterliegen diese einem Verschleiß, da bei jeder Bewegung des Reibwerkstoffelementes relativ zum Tragkörper das Reibwerkstoffelement beziehungsweise die umgebende Hülse entlang der Wand der Ausnehmung im Tragkörper gleitet. Da beim Bremsvorgang erhebliche Kräfte quer zu der Gleitrichtung der Reibwerkstoffelemente auftreten, werden die Reibwerkstoffelemente gekippt beziehungsweise gegen die Innenwand der Ausnehmung im Tragkörper gepreßt, so daß bei einer relativen Bewegung des Reibwerkstoffelementes zum Tragkörper eine erhebliche Reibkraft auftritt, die einen schnellen Verschleiß zur Folge hat. Dies kann insbesondere zu einem Aufweiten der Ausnehmung im Tragkörper führen, was die Gefahr birgt, daß sich das Reibwerkstoffelement löst beziehungsweise aus der Ausnehmung herausfällt. Daher sind kurze Revisionszeiten und ein häufiges Austauschen der Reibwerkstoffelemente erforderlich, und die aufgeweiteten Ausnehmungen müssen regelmäßig nachgearbeitet werden.

Aufgabe der Erfindung ist es somit, einen Bremskörper insbesondere für Klotzbremsen und Scheibenbremsen darzustellen, mit dem die zuvor genannten Nachteile überwunden werden. Insbesondere soll Reibung zwischen dem Reibwerkstoffelement und dem Tragkörper vermieden werden und das Herausfallen des Reibwerkstoffelementes wirkungsvoll verhindert werden. Die Ausführung soll eine kostengünstige Herstellung, Montage und Wartung ermöglichen.

Erfindungsgemäß wird dies dadurch erreicht, daß die Verschiebung der Reibwerkstoffelemente in Längsrichtung der Ausnehmungen im Tragkörper nicht mehr durch Gleiten sondern durch Einfedern erfolgt. In den Zwischenraum längs der Ausnehmung zwischen Reibwerkstoffelement und Tragkörper ist erfindungsgemäß eine scherelastische Zwischenschicht eingebracht. Diese Schicht läßt eine Einfederung des Reibwerkstoffelementes in die Ausnehmung im Tragkörper, in die es eingebracht ist, beim Bremsen zu, so daß Tragkörper und Reibwerkstoffelement zusammen eine Reibfläche ausbilden.

Die Federkraft, die dem Eindrücken des Reibwerkstoffelementes in die Aussparung entgegensteht, kann dabei allein durch die scherelastische Schicht aufgebracht werden. Wenn das Reibwerkstoffelement in seiner Längsrichtung auf einem elastischen Element gelagert ist, so kann besonders vorteilhaft die scherelastische Zwischenschicht und das elastische Element den selben Werkstoff umfassen. Voraussetzung hierfür ist, daß der Werkstoff sowohl druckelastische als auch scherelastische Eigenschaften aufweist. Damit können die Herstellungskosten verringert und die Anzahl der verwendeten Werkstoffe begrenzt werden. Das druckelastische Element und die scherelastische Zwischenschicht können dabei besonders kostengünstig als ein Bauteil ausgeführt sein.

Die erfindungsgemäße scherelastische Schicht umfaßt verschiedene Ausführungsformen. Beispielsweise sei eine Füllung zwischen Reibwerkstoffelement und Tragkörper genannt. Weiterhin ist eine scherelastische Zwischenschicht denkbar, die als Schlauch auf dem Reibwerkstoffelement aufgebracht ist. Vorteilhaft kann auch das Reibwerkstoffelement mit einem scherelastischen Werkstoff beschichtet werden. Die letzt genannten Ausführungen ermöglichen neben der einfachen Produktion auch eine leichte Montage beziehungsweise einen einfachen Austausch.

Selbstverständlich kann die scherelastische Schicht auch auf dem Tragkörper, das heißt in die Aussparung desselben eingebracht sein.

Um ein Herausfallen des Reibwerkstoffelementes zu verhindern, können Reibwerkstoffelement, scherelastische Schicht und Tragkörper fest miteinander verbunden und insbesondere verklebt sein. Es sind aber auch Ausführungen denkbar, bei der die scherelastische Schicht nur auf dem Reibwerkstoffelement oder nur auf dem Tragkörper aufgebracht ist und an dem jeweiligen anderen Element lediglich haftet. Selbstverständlich kann die scherelastische Schicht auch als selbstständiges Bauteil zwischen das Reibwerkstoffelement und den Tragkörper geschaltet werden.

Eine weitere wirkungsvolle Sicherung gegen Herausfallen kann dadurch erzielt werden, daß das Reibwerkstoffelement konisch ausgeführt ist. Läuft der Konus dabei in Richtung der Bremsfläche zusammen, so ist ein Herausfallen unmöglich.

Läuft hingegen der Konus in Richtung der Bremsfläche auseinander, so wird, insbesondere wenn die scherelastische Schicht auch druckelastische Eigenschaften aufweist, die Flächenpressung zwischen Reibwerkstoffelement und Tragkörper verringert, da sich der Druck in Längsrichtung der Ausnehmung auf eine größere Fläche verteilt. Beide konischen Verläufe können miteinander kombiniert werden, um so die genannten positiven Effekte gleichzeitig ausnutzen zu können.

Das Reibwerkstoffelement kann von allen Seiten bis auf die Seite der Bremsfläche vom Tragkörper zumindest mittelbar umschlossen sein. Eine besonders vorteilhafte Ausführung sieht jedoch die Lagerung des Reibwerkstoffelementes mit seiner der Bremsfläche entgegengesetzten Seite mittelbar auf einer Trägerplatte vor. Dies ist besonders dann vorteilhaft, wenn das Reibwerkstoffelement in Richtung seiner Bremsfläche konisch zusammenlaufend ausgeführt ist, da es dann von der Seite der Trägerplatte in die ebenfalls konische Aussparung des Tragkörpers eingesetzt werden kann. Bei einer Ausführung mit einer Trägerplatte sind zwei Möglichkeiten der Lagerung denkbar. Zum einen kann ein druckelastisches Element zwischen Reibwerkstoffelement und Trägerplatte geschaltet werden. Zum anderen kann die Trägerplatte zumindest im Bereich der Lagerung des Reibwerkstoffelementes selbst elastisch ausgeführt sein und so die erforderliche Kraft auf das Reibwerkstoffelement ausüben.

Die wesentlichen Elemente der Erfindung sollen nachfolgend anhand der in den Figuren dargestellten Ausführungsbeispiele beschrieben werden.

Es zeigen:
- Figur 1: einen Schnitt durch einen erfindungsgemäßen Bremskörper mit zylindrischem Reibwerkstoffelement;
- Figur 2a: einen Schnitt durch einen erfindungsgemäßen Bremskörper mit in Richtung der Bremsfläche konisch auseinanderlaufendem Reibwerkstoffelement;
- Figur 2b: einen Schnitt durch einen erfindungsgemäßen Bremskörper mit in Richtung der Bremsfläche konisch zusammenlaufendem Reibwerkstoffelement;
- Figur 3a: einen erfindungsgemäßen, an einer ebenen Radlauffläche anliegenden Bremskörper, gelagert durch Federelemente;
- Figur 3b: einen erfindungsgemäßen, an einer unebenen Radlauffläche anliegenden Bremskörper, gelagert durch Federelemente.

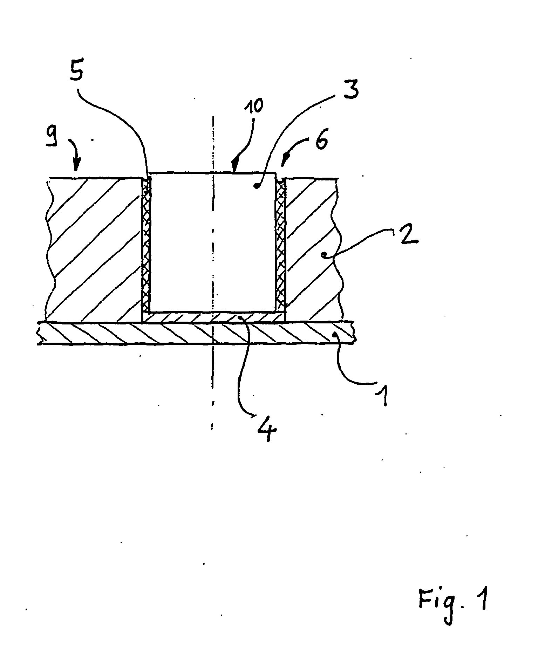

Figur 1 zeigt in einem Schnitt einen erfindungsgemäßen elastischen Bremskörper. Der Bremskörper umfaßt eine Trägerplatte 1, einen Tragkörper 2 und ein Reibwerkstoffelement 3. Der Tragkörper 2 hat eine Ausnehmung 6. In die Ausnehmung 6 ist das Reibwerkstoffelement 3 in Längsrichtung der Ausnehmung beweglich eingebracht. Das Reibwerkstoffelement 3 ist auf einem Federelement 4 gelagert. Das Federelement 4 stützt sich auf der Trägerplatte 1 ab. In den Zwischenraum längs der Ausnehmung 6 zwischen Reibwerkstoffelement 3 und Tragkörper 2 ist eine scherelastische Zwischenschicht 5 eingebracht. Das Reibwerkstoffelement 3 steht in Ruhestellung über die Reibfläche 9 des Tragkörpers 2 hervor. Beim Bremsen wird das Reibwerkstoffelement 3 auf das Federelement 4 gedrückt, wobei die scherelastische Füllung 5 ein Einfedern ohne Verschleiß durch Reibung zwischen Reibwerkstoffelement 3 und Tragkörper 2 gewährleistet. Durch das Einfedern bilden Tragkörper 2 und Reibwerkstoffelement 3 beim Bremsen eine gemeinsame Reibfläche, zusammengesetzt aus der Reibfläche 9 des Tragkörpers 2 und der Reibfläche 10 des Reibwerkstoffelementes 3, aus.

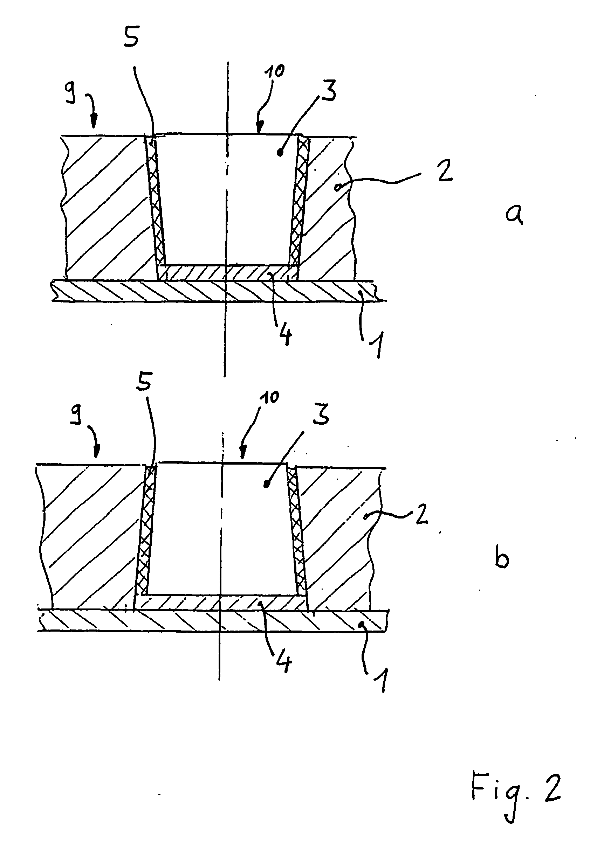

In Figur 2a ist ein erfindungsgemäßer elastischer Bremskörper mit einem konischen Reibwerkstoffelement 3 dargestellt. Die in Figur 2a dargestellte Ausführung zeigt ein konisches Reibwerkstoffelement 3, das in Richtung der Bremsfläche einen auseinanderlaufenden Querschnitt aufweist. Durch die erfindungsgemäße Ausführung mit einer scherelastischen Zwischenschicht 5, die hier vorteilhaft auch druckelastische Eigenschaften aufweist, wird die Flächenpressung zwischen Reibwerkstoffelement 3 und Tragkörper 2 im Bremsbetrieb durch eine größere wirksame Auflagefläche verringert. Ein Herausfallen des Reibwerkstoffelementes kann erfindungsgemäß dadurch verhindert werden, daß Reibwerkstoffelement 3, scherelastische Zwischenschicht 5 und Tragkörper 2 fest miteinander verbunden, insbesondere verklebt sind.

Figur 2b zeigt einen erfindungsgemäßen Bremskörper mit einem konisch ausgeführten Reibwerkstoffelement 3, das im Querschnitt in Richtung der Bremsfläche zusammenläuft. Es ist wie in Figur 2a mittels einem Federelement 4 auf einer Trägerplatte 1 gelagert. Erfindungsgemäß ist in den Zwischenraum zwischen Reibwerkstoffelement 3 und Tragkörper 2 in Längsrichtung der Ausnehmung eine scherelastische Zwischenschicht 5 eingebracht. Durch die hier dargestellte konische Ausführung ist ein Herausfallen des Reibwerkstoffelementes 3 unmöglich. Die Ausführung mit der Trägerplatte 1 ermöglicht eine einfache Montage des Reibwerkstoffelementes 3 im Tragkörper 2 bei abmontierter Trägerplatte 1.

Selbstverständlich ist eine Kombination der in Figuren 2a und b gezeigten Merkmale möglich. Zur Montage eines solchen zweifach konisch ausgeführten Reibwerkstoffelementes muß die Trägerplatte mit einer konischen Ausnehmung entsprechend des Konturverlaufes des der Bremsfläche entgegengesetzten Endes des Reibwerkstoffelementes versehen sein.

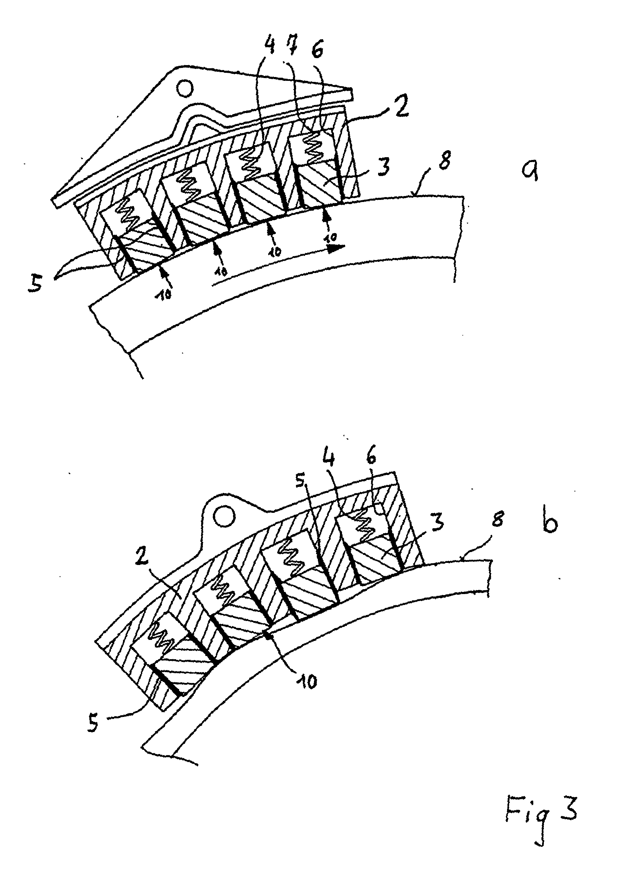

Figur 3a zeigt einen erfindungsgemäßen, an einer ebenen Radlauffläche 8 anliegenden Bremskörper. In der dargestellten Ausführung sind die Reibwerkstoffelemente 3 mittels eines Federelementes 4 auf dem Grund 7 der Ausnehmungen 6 im Tragkörper 2 gelagert. Die scherelastische Zwischenschicht 5 verhindert die Reibung zwischen den Reibwerkstoffelementen 3 und dem Tragkörper 2.

Figur 3b zeigt einen erfindungsgemäßen, an einer unebenen Radlauffläche 8 anliegenden Bremskörper. Entsprechend der Kontur der Radlauffläche 8 werden die Reibwerkstoffelemente 3 ein- beziehungsweise ausgefedert. Die scherelastische Zwischenschicht 5 verhindert das Auftreten von Reibung zwischen den Reibwerkstoffelementen 3 und dem Tragkörper 2. Die Federkraft setzt sich zusammen aus der scherelastischen Federkraft der scherelastischen Zwischenschicht 5 und der Druckfederkraft der Federelemente 4.

Mit dem erfindungsgemäßen Bremskörper wird somit erstmals ein Bremsklotz beziehungsweise ein Scheibenbremsbelag angegeben, der sich durch einfachen kostengünstigen Aufbau auszeichnet und bei dem es erstmals möglich ist, das Auftreten von verschleißender Reibung zwischen Reibwerkstoffelement und Tragkörper vollends zu vermeiden. Die Montage ist kostengünstig und das Reibwerkstoffelement ist optimal gegen Herausfallen gesichert. Somit ist ein dauerhafter, sicherer Betrieb gewährleistet.

### Bezugszeichenliste

- 1: Trägerplatte
- 2: Tragkörper
- 3: Reibwerkstoffelement
- 4: Federelement
- 5: scherelastische Füllung
- 6: Ausnehmung
- 7: Grund der Ausnehmung
- 8: Radlauffläche
- 9: Reibfläche des Tragkörpers
- 10: Reibfläche des Reibwerkstoffelementes

## Patentansprüche

1. Bremskörper, umfassend
1.1 einen Tragkörper (2) mit mindestens einer Ausnehmung (6);
1.2 mindestens ein in der Ausnehmung angeordneten Reibwerkstoffelement (3);
1.3 das Reibwerkstoffelement (3) ist in Richtung längs der Ausnehmung (6) senkrecht zur Reibfläche beweglich gelagert und bildet zusammen mit dem Tragkörper (2) eine Reibfläche (9, 10) aus,
1.4 wobei in den Zwischenraum längs der Ausnehmung (6) zwischen Reibwerkstoffelement (3) und Tagkörper (2) eine scherelastische Zwischenschicht (5) eingebracht ist,
1.5 wobei die scherelastische Zwischenschicht (5) eine Einfederung des Reibstoffwerkelementes (3) in die Ausnehmung im Tragkörper (2) beim Bremsen zulässt,
**dadurch gekennzeichnet, daß**
1.6 die scherelastische Zwischenschicht Federkraft aufbringt, die dem Eindrücken des Reibwerkstoffelements (3) in die Ausnehmung (6) entgegensteht.

2. Bremskörper gemäß Anspruch 1, **dadurch gekennzeichnet, daß** das Reibwerkstoffelement (3) in seiner Längsrichtung auf einem elastischen Element gelagert ist.

3. Bremskörper gemäß Anspruch 2, **dadurch gekennzeichnet, daß** das elastische Element ein Federelement (4) umfaßt.

4. Bremskörper gemäß Anspruch 2, **dadurch gekennzeichnet, daß** die scherelastische Zwischenschicht (5) und das elastische Element den selben Werkstoff umfassen.

5. Bremskörper gemäß Anspruch 4, **dadurch gekennzeichnet, daß** die scherelastische Zwischenschicht (5) und das elastische Element als ein Bauteil ausgeführt sind.

6. Bremskörper gemäß einem der Ansprüche 1 bis 5 **dadurch gekennzeichnet, daß** die scherelastische Zwischenschicht (5) als Füllung zwischen dem Reibstoffelement (3) und dem Tragkörper (2) eingebracht ist.

7. Bremskörper gemäß einem der Ansprüche 1 bis 5, **dadurch gekennzeichnet, daß** die scherelastische Zwischenschicht (5) als Schlauch auf dem Reibwerkstoffelement (3) aufgebracht ist.

8. Bremskörper gemäß einem der Ansprüche 1 bis 5, **dadurch gekennzeichnet, daß** die scherelastische Zwischenschicht (5) als Beschichtung auf dem Reibwerkstoffelement (3) aufgebracht ist.

9. Bremskörper gemäß einem der Ansprüche 1 bis 8, **dadurch gekennzeichnet, daß** das Reibwerkstoffelement (3) und die scherelastische Zwischenschicht (5) und der Tragkörper (2) fest miteinander verbunden, insbesondere verklebt sind.

10. Bremskörper gemäß einem der Ansprüche 1 bis 9, **dadurch gekennzeichnet, daß** das Reibwerkstoffelement (3) in Längsrichtung konisch ausgeführt ist.

11. Bremskörper gemäß einem der Ansprüche 1 bis 10, **dadurch gekennzeichnet, daß** die Ausnehmung (6) als Sackloch ausgeführt ist.

12. Bremskörper gemäß einem der Ansprüche 1 bis 11, **dadurch gekennzeichnet, daß** der Bremskörper eine Trägerplatte (1) umfaßt.

13. Bremskörper gemäß Anspruch 12, **dadurch gekennzeichnet, daß** das Reibwerkstoffelement (3) wenigstens mittelbar auf der Trägerplatte (1) gelagert ist.

## Claims

1. Brake body, comprising
1.1 a supporting body (2) including at least one recess (6);
1.2 at least one element (3) made of a frictional material and disposed in said recess;
1.3 with said element (3) made of a frictional material being disposed for movement in a direction along said recess (6) and perpendicular to the friction surface and cooperating with said supporting body (2) for forming a friction surface (9, 10),
1.4 wherein an intermediate layer (5) resilient in terms of shear is inserted into the space along said recess (6) between said element (3) made of a frictional material and said supporting body (2),
1.5 wherein said intermediate layer (5) resilient in terms of shear allows a deflection of the element (3) made of a frictional material into the recess in the supporting body (2) in the braking process,
**characterised in that**
1.6 the intermediate layer resilient in terms of shear applies a spring force which is opposed to the pushing of the element (3) made of a frictional material into the recess (6).

2. Brake body according to Claim 1, **characterised in that** said element (3) made of a frictional material is supported on a resilient element along its longitudinal extension.

3. Brake body according to Claim 2, **characterised in that** said resilient element includes a spring element (4).

4. Brake body according to Claim 4, **characterised in that** said intermediate layer (5) resilient in terms of shear and said resilient element include the same material.

5. Brake body according to Claim 4, **characterised in that** said intermediate layer (5) resilient in terms of shear and said resilient element are realised as a single component.

6. Brake body according to any of the Claims 1 to 5, **characterised in that** said intermediate layer (5) resilient in terms of shear is inserted as filler between said element (3) made of a frictional material and said supporting body (2).

7. Brake body according to any of the Claims 1 to 5, **characterised in that** said intermediate layer (5) resilient in terms of shear is applied in the form of a tube onto said element (3) made of a frictional material.

8. Brake body according to any of the Claims 1 to 5, **characterised in that** said intermediate layer (5) resilient in terms of shear is applied in the form of a coating onto said element (3) made of a frictional material.

9. Brake body according to any of the Claims 1 to 8, **characterised in that** said element (3) made of a frictional material and said intermediate layer (5) resilient in terms of shear and said supporting body (2) are fixedly connected to each other, specifically by adhesive bonding.

10. Brake body according to any of the Claims 1 to 9, **characterised in that** said element (3) made of a frictional material is configured in a conical shape along its longitudinal extension.

11. Brake body according to any of the Claims 1 to 10, **characterised in that** said recess (6) is configured as blind hole.

12. Brake body according to any of the Claims 1 to 11, **characterised in that** the brake body includes a supporting plate (1).

13. Brake body according to Claim 12, **characterised in that** said element (3) made of a frictional material is supported, at least indirectly, on said supporting plate (1).

## Revendications

1. Corps de freinage, en particulier cale de freinage ou garniture d'un frein à disque, comprenant
1.1 un corps de support (2) renfermant au moins un creux (6) ;
1.2 au moins un élément (3) fait en un matériau frictionnel et disposé dans ledit creux ;
1.3 l'élément (3) fait en un matériau frictionnel étant disposé pour un mouvement en un sens le long dudit creux (6) formant avec ledit corps de support (2) une surface de friction (9, 10),
1.4 une couche intermédiaire (5) élastique en cisaillement étant insérée dans l'espace le long dudit creux (6) entre ledit élément (3) fait en un matériau frictionnel et ledit corps de support (2),
1.5 la couche intermédiaire (5) élastique en cisaillement autorisant une compression de l'élément (3) fait en un matériau frictionnel dans le creux du corps de support (2) lors du freinage,
**caractérisé en ce que**
1.6 la couche intermédiaire élastique en cisaillement applique une force élastique qui s'oppose à l'enfoncement de l'élément (3) fait en un matériau frictionnel dans le creux (6).

2. Corps de freinage selon la revendication 1, **caractérisé en ce que** ledit élément (3) fait en un matériau frictionnel est appuyé sur un élément élastique le long de son étendue longitudinale.

3. Corps de freinage selon la revendication 2, **caractérisé en ce que** ledit élément élastique comprend un élément de ressort (4).

4. Corps de freinage selon la revendication 4, **caractérisé en ce que** ladite couche intermédiaire (5) élastique en cisaillement ainsi que ledit élément élastique contiennent le même matériau.

5. Corps de freinage selon la revendication 4, **caractérisé en ce que** ladite couche intermédiaire (5) élastique en cisaillement et ledit élément élastique sont réalisés en tant qu'un seul composant.

6. Corps de freinage selon une quelconque des revendications 1 à 5, **caractérisé en ce que** ladite couche intermédiaire (5) élastique en cisaillement est inséré en tant que filler entre ledit élément (3) fait en un matériau frictionnel et ledit corps de support (2).

7. Corps de freinage selon une quelconque des revendications 1 à 5, **caractérisé en ce que** ladite couche intermédiaire (5) élastique en cisaillement est appliquée sous forme d'une tube sur ledit élément (3) fait en un matériau frictionnel.

8. Corps de freinage selon une quelconque des revendications 1 à 5, **caractérisé en ce que** ladite couche intermédiaire (5) élastique en cisaillement est appliquée sous forme d'un revêtement sur ledit élément (3) fait en un matériau frictionnel.

9. Corps de freinage selon une quelconque des revendications 1 à 8, **caractérisé en ce que** ledit élément (3) fait en un matériau frictionnel et ladite couche intermédiaire (5) élastique en cisaillement et ledit corps de support (2) sont reliés, de façon fixe, l'un à l'autre, en particulier par voie adhésive.

10. Corps de freinage selon une quelconque des revendications 1 à 9, **caractérisé en ce que** ledit élément (3) fait en un matériau frictionnel est configuré sous forme conique le long de son étendue longitudinale.

11. Corps de freinage selon une quelconque des revendications 1 à 10, **caractérisé en ce que** ledit creux (6) est configuré en tant qu'un trou borgne.

12. Corps de freinage selon une quelconque des revendications 1 à 11, **caractérisé en ce que** le corps de freinage comprend une plaque de support (1).

13. Corps de freinage selon la revendication 12, **caractérisé en ce que** ledit élément (3) fait en un matériau frictionnel est appuyé, au moins de manière indirecte, sur ladite plaque de support (1).
